# EUROPEAN PATENT APPLICATION

(11) **EP 1 728 487 A1**
(43) Date of publication of application: **06.12.2006**
(21) Application number: 04712628.9
(22) Date of filing: 19.02.2004
(51) Int. Cl.: A61C 13/30, A61C 5/04

(54) **INTRA-RADICULAR POST FOR DENTAL RECONSTRUCTION WITH CANAL TREATMENT**

(71) Applicant: Kogan Frenk, Enrique, 11000 Mexico, D. F. (MX)
(72) Inventor: Kogan Frenk, Enrique, 11000 Mexico, D. F. (MX)
(74) Representative: Zardi, Marco
(86) International application number: PCT/IB2004/000422
(87) International publication number: WO 2005/087132

(57) **Abstract**

SUMMARY OF THE INVENTION.

An intra-radicular post is described for rebuilding of teeth, with treatment of passages, comprised of one apical portion, a body adjacent to the apical portion, and one head adjacent to the body; **characterized** because the body is frusto-conical and tapered in such a way that its diameter is greater at the side proximal to the head and lower at the side proximal to the apical portion; apical portion comprises cylindrical segments with a flat end; and the head portion comprises conical segments having at least one flat lateral face; the post having thus improved insertion and retention properties.

## Description

### FIELD OF THE INVENTION

Present invention is related to a procedure for teeth rebuilding with treatment of passages; this technique is also known as endodontics.

### BACKGROUND OF THE INVENTION

The human tooth comprises a root and a crown. The crown is the visible part of the tooth, appreciated over the gingiva or gum, while the root is found immersed into the gingiva. By means of their root, teeth are anchored to maxilia or mandible bones. Inside the root, there are passages containing dental tissue consisting of nerves and blood vessels.

Dental tissue can become infected due to several causes, as caries, traumatisms, fractures, etc. Depending on the magnitude of dental tissue loss, said teeth require treatment of passages, or endodontics.

Endodontics is a branch of dentistry, related to treatment of teeth having ailments of dental tissue.

The objective of the passage treatment consists in the elimination of ill dental tissue, the cleaning and backfilling of the passage and the placement of a crown to preserve the tooth's functionality.

In many cases, the crown is destroyed by caries or traumatisms; then a prosthetic artificial crown is used, which replaces the original crown.
In order to fix the artificial prosthetic crown, one resorts to the placement of intra-radicular posts or bolts, which are inserted into the passage inside the tooth's root; said posts having the purpose of anchoring some restoring material, which in its turn will serve as support for an artificial prosthetic crown.

Since time ago, these posts exist in dentistry, being fabricated in varied forms, techniques and materials. In the market there are posts with smooth, striated, parallel, conical and combined design. Marco Ferrari and Roberto Scotti, in their book titled FIBER POST, Masson SPA, Italy 2002, describe a variety of posts according to previous techniques.

US Patent No. 4,952,150, August 28, 1990, describes an intra-radicular post for curved roots. In its turn, US Patent No. 6,447,297, of September 10, 2002, describes an intra-radicular post comprising a nozzle for injecting filling material to the root.

Among the disadvantages of intra-radicular posts of previous techniques, following can be mentioned:
a) Posts according to previous technique are designed for straight roots, while the majority of teeth has conical roots.
b) Posts according previous techniques have not found a balance between the post strength and flexibility required in their application.
c) Posts according to previous technique are designed for only one type of teeth, that is, for constant dimensions of apex, body and head. But the passage dimensions are variable, which requires a great variety of posts to be applied in passages of different dimensions.
d) Once installed, the posts according to previous technique show vertical dislocation and crown rotation, resulting from deficient placement and retention caused by the post design.

The aforementioned drawbacks of posts according to previous technique are remedied with the post of the present invention.

Therefore, a first objective of the invention consists of providing an intra-radicular post, useful for rebuilding of teeth, with passage treatment for better placement and retention properties, inside the teeth's passage.

A second objective of the present invention consists of providing an intra-radicular post, useful for rebuilding of teeth, with treatment of passages, and with vertical and axial retention properties of the improved crowns.

A further objective of present invention consists of providing an intra-radicular post useful for rebuilding of teeth, with treatment of passages, and of adjustable dimensions.

### BRIEF DESCRIPTION OF FIGURES.

Fig. 1 shows a lateral view of the intra-radicular post of the present invention.
Fig. 2 shows the intra-radicular post of the present invention, as illustrated in Fig. 1, but rotated 90°.

### DETAILED DESCRIPTION OF THE INVENTION

Endodontic procedures have evolved towards the use of instruments known as rotary, which differ from the traditional ones, among other things, because they are conical for forming these passages in a more anatomical way. Present invention relates to intra-radicular posts for the treatment of passages by means of rotary instruments.

The intra-radicular post of the present invention is flexible in terms of height, taper and backfilling, when compared to the endodontic drills used to prepare the channel or passage.

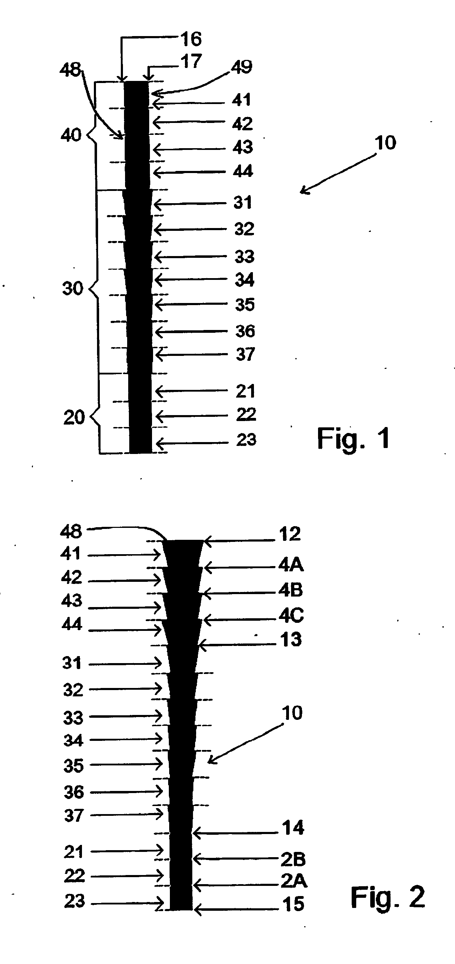

The intra-radicular post 10 shown in Figures 1 and 2 has an approximate length of 14 mm, these being divided in three parts, the lower or apical portion 20, the body 30 and the upper portion 40. The apical portion 20 is adjacent to body 30, while the head is also adjacent to body 30.

The intra-radicular post 10 has a tapered form such as the apical portion has a lesser diameter than the upper portion or head 40 diameter. The body 30 diameter also gradually increases towards the upper or head 40 portion. The taper or conicity of the body is 0.06 mm/mm, and in an alternate embodiment, it is 0.4 mm/mm. This taper matches those reported in the literature, for teeth passages. The head 40 portions and body 30 comprise conical frustum sections (truncated-cone sections).

By conical frustum sections, sections similar to cones shall be understood, in whose cones both ends are planes and one has a greater diameter than the other.

The intra-radicular post 10 is placed inside the teeth's passage, from which the dental tissue or pulp has been withdrawn. Once placed the intra-radicular post, the apical portion 10 and body 30 remain inside the tooth's passage, while the upper or head portion 40 projects from the passage in such a way that it can serve as an anchor to the prosthetic crown.

The lower or apical portion comprises a plurality of cylindrical segments, preferable three cylindrical segments 21, 22 and 23. Each segment preferably measures 1 mm in length, so that the total length of apical portion is 3 mm, and has a constant-diameter cylindrical form and a flat end 15.

Main function of apical portion 20 is to provide a real stop for the post, at the bottom of the passage. The apical portion 20 has improved insertion properties into the passage, when compared to the posts according previous technique, which have pointed apical portions. The apical points are prone to deforming and breaking.

In order to effect adjustments to apical portion 20's dimensions, the possibility is provided for realizing a cut at the line 2A, in order to eliminate the segment 23, or at the line 2B for eliminating segments 22 and 23.

Evidently, the dentist can realize a first cut at the line 2A, and In case it will be not adequate, can do a second cut at the line 2B. This way should allow making 2 adjustments of height; however, apical portion 20 shall have minimal dimensions of 1 mm. Lines 2A and 2B are shown in Fig. 2.

The second or body portion 30 has a plurality of conical segments. Preferably, the body 30 is made of seven cones (31 to 37) of 1 mm height, making a total approximate length of 7 mm. Each conical segment has an upper diameter more close to the head portion 40, and a lower diameter, more close to the apical portion 20, upper diameter being larger than lower diameter.

The taper of cones 31 to 37 decreases approximately 0.04 mm/mm; that is, the larger diameter decreases 0.04 mm in each millimeter of body 40 length; therefore, none of the cones has similar dimensions. The cones more close to the head portion 40 has a ratio of upper diameter to lower diameter larger than the cones more close to the apical portion 20. That is, the segments more close to head 40 are more tapered than the segments more close to the apical portion 20 and also have a larger diameter, therefore being more wide. As can be appreciated in Figs. 1 and 2, the segment 37 adjacent to apical portion has a very slight taper, being a natural continuation of the cylindrical apical portion.

The design of the body, with 1-mm height cones 31 to 37 increases retention of the intra-radicular post 10 inside the passage, which allows for an easy adhesion procedure. Also, the cone design avoids the vertical dislocation.

From the other side, the taper attenuation at the neighborhood of apical portion 20 allows an improved insertion of the post into the tooth passage. The passages normally are wider at the zone nearest the crown, and turn narrower at the root.

The head 40 comprises a plurality of conical segments, having at least one flat face. Preferably, the head 40 comprises four conical segments 41, 42, 43 and 44, which have two lateral flat surfaces.

As can be seen in Fig. 1, head 40 has a pair 16 and 17 of lateral cuts, which define the opposite lateral flat faces 48 and 49. Said cuts have the purpose of avoiding the rotation of the nucleus or lug and the prosthetic crown, which later is anchored to the head 40 of the intra-radicular post 10. This design results in a head with increased retentive, and prevents the vertical dislodgement and the rotation of the material in the nucleus.

As will be evident to a person learned in the technique, it is possible to replace the lateral opposite faces 48 and 49 with only one flat face, or with two adjacent flat faces, or a configuration can be used having three flat faces; in all these mentioned cases, it can be appreciated that, by virtue of the flat faces, the rotation of the nucleus will be prevented, as well as of the prosthetic crown.

Preferably, the upper or head portion 40 of the post 10 has an approximate length of 4 mm, and comprises 4 segments 41, 42, 43 and 44, each of 1 mm height, which optionally can be accommodated with 45 degrees' rotations.

At the head 40 it is possible to realize three length adjustments, by 1, 2 or 3 mm. A first length adjustment consists in eliminating segment 41 by realizing a cut through the line 4A; segments 41 and 42 can be eliminated by realizing a cut through line 4B, and segments 41, 42 and 43 can be eliminated realizing a cut through line 4C.. In Fig. 2 are shown the cutting lines 4A, 4B and 4C.

With the length adjustments, different dimensions can be provided to the intra-radicular posts according to this invention, as will next be illustrated.

The intra-radicular size can be 7 mm of body 30, plus 3 mm of apex portion 20, or 7 mm body 30 plus 2 mm of apical portion 20, or 7 mm body 30 plus 1 mm of apical portion. All these lengths can be combined with a head 40 of 4 mm, 3 mm, 2 mm, or 1 mm.

### Head 40 segments 41 to 44 have similar dimensions.

In each body 30 segment, towards apex part 20, the taper gradually diminishes from 0.03 to 0.07 mm for each 1-mm segment; preferably from 0.4 mm/mm or 0.06 mm/mm.

In a preferred embodiment of the invention, the lower diameter in each conical segment of the body and the head, has the diameter dimension of the apical portion. However, the lower diameter can have any value, as long as it is less than the upper diameter, in order to define the conical frustum-shaped sections.

The apex portion 20 consists of a cylinder of constant diameter in each of the segments 21,22 and 23.

Following table illustrates the segment dimensions in an intra-radicular post according to present invention.

| Part | Segment | Upper diameter (mm) | Lower diameter (mm) |
|---|---|---|---|
| Head (40) | 41 | 1.64 | 0.80 |
| | 42 | 1.64 | 0.80 |
| | 43 | 1.64 | 0.80 |
| | 44 | 1.64 | 0.80 |
| Body (30) | 31 | 1.32 | 0.80 |
| | 32 | 1.26 | 0.80 |
| | 33 | 1.20 | 0.80 |
| | 34 | 1.14 | 0.80 |
| | 35 | 1.08 | 0.80 |
| | 36 | 1.02 | 0.80 |
| | 37 | 0.96 | 0.80 |
| Apical portion 20 | 21 | 0.90 | 0.80 |
| | 22 | 0.80 | 0.80 |
| | 23 | 0.80 | 0.80 |

Also, it is foreseen the provision of intra-radicular posts with different diameters, but with the same length dimensions, for example:
Post No. 2, with a diameter of 0.80 mm in apical portion 20, 0.04 mm/mm taper in each body 30 segment, and a head 40 with 1.32 mm upper diameter.
Post No. 3, with a diameter of 0.90 mm in apical portion 20, 0.04 mm/mm taper in each body 30 segment, and a head 40 with 1.42 mm upper diameter.
Post No. 4, with a diameter of 0.80 mm in apical portion 20, 0.06 mm/mm taper in each body 30 segment, and a head 40 with 1.32 mm upper diameter.
Post No. 5, with a diameter of 0.90 mm in apical portion 20, 0.06 mm/mm taper in each body 30 segment, and a head 40 with 1.42 mm upper diameter.
Post No. 6, with a diameter of 0.70 mm in apical portion 20, 0.06 mm/mm taper in each body 30 segment, and a head 40 with 1.54 mm upper diameter.
Post No. 6, with a diameter of 0.90 mm in apical portion 20, 0.04 mm/mm taper in each body 30 segment, and a head 40 with 1.54 mm upper diameter.
Post No. 8, with a diameter of 1.0 mm in apical portion 20, 0.04 mm/mm taper in each body 30 segment, and a head 40 with 1.64 mm upper diameter.

Optionally, the posts are color-coded for an easy identification of the apex with the taper dimensions required for a specific application.

The intra-radicular post can be fabricated in a variety of materials, for example, quartz fiber or glass fiber. Preferred material is quartz fiber, which possess the best mechanical properties, in terms of resistance and flexibility.

Also, quartz fiber has the best aesthetic properties, because it has a radioopaque color, resulting in a more natural appearance of the prosthetic crown, different from the artificial appearance resulting from the use of intra-radicular posts according to previous technique.

## Claims

1. An intra-radicular post, for rebuilding of teeth, with treatment of passages, comprising an apical portion, a body adjacent to the apical portion, and a head adjacent to the body; **characterized in that** the body is tapered with a higher diameter near to the head and a lower diameter near to the apical portion and further comprising a plurality of conical segments.

2. An intra-radicular post for rebuilding of teeth, with treatment of passages, according to claim 1, whereupon the post body has a taper of between 0.03 and 0.07 mm/mm.

3. An intra-radicular post for rebuilding of teeth, with treatment of passages, according to claim 2, whereupon the post body has a taper of 0.04 mm/mm.

4. An intra-radicular post for rebuilding of teeth, with treatment of passages, according to claim 3, whereupon the post body has a taper of 0.06 mm/mm.

5. An intra-radicular post for rebuilding of teeth, with treatment of passages, according to claim 3, wherein the conical body comprises seven conical segments.

6. An intra-radicular post for rebuilding of teeth, with treatment of passages, according to claim 1, whereupon each segment of the post has an approximate height of 1 mm.

7. An intra-radicular post, for rebuilding of teeth, with treatment of passages, comprising an apical portion, a body adjacent to the apical portion, and a head adjacent to the body; **characterized in that** the apical portion comprises a plurality of cylindrical segments with a flat end.

8. An intra-radicular post for rebuilding of teeth, with treatment of passages, according to claim 7, wherein the apical portion comprises three cylindrical segments.

9. An intra-radicular post, for rebuilding of teeth, with treatment of passages, comprising an apical portion, a body adjacent to the apical portion, and a head adjacent to the body; **characterized in that** the head comprises a plurality of conical segments and at least a lateral flat face.

10. An intra-radicular post for rebuilding of teeth, with treatment of passages, according to claim 9, wherein the head comprises four conical segments.

11. An intra-radicular post for rebuilding of teeth, with treatment of passages, according to claim 9, wherein the head comprises two lateral flat faces.

12. An intra-radicular post, for rebuilding of teeth, with treatment of passages, comprising an apical portion, a body adjacent to the apical portion, and a head adjacent to the body; **characterized in that** the post height can be modified by making up to two cuts in the apical portion and/or up to three cuts in the post head.

13. An intra-radicular post of adjustable dimensions for rebuilding of teeth, with treatment of passages, according to claim 12, wherein the height adjustment consists in cutting one, two or three conical segments from the head.

14. An intra-radicular post of adjustable dimensions, for rebuilding of teeth, with treatment of passages, according to claim 12, whereupon the height adjustment consists in cutting one or two cylindrical segments of the apical portion.

## Amended claims

### Amended claims under Art. 19.1 PCT

**1.** An intra-radicular post of adjustable dimensions, for rebuilding of teeth, with treatment of passages, comprised of:
(a) an apical portion, formed by constant-diameter segments;
(b) a tapered body, formed by conical segments and adjacent to the apical portion; and
(c) a head formed by conical segments, and adjacent to the tapered body.

**2.** An intra-radicular post for rebuilding of teeth, with treatment of passages, according to claim 1, whereupon the post body has a taper of between 0.03 and 0.07 mm/mm.

**3.** An intra-radicular post for rebuilding of teeth, with treatment of passages, according to claim 2, whereupon the post body has a taper of 0.04 mm/mm.

**4.** An intra-radicular post for rebuilding of teeth, with treatment of passages, according to claim 2, whereupon the post body has a taper of 0.06 mm/mm.

**5.** An intra-radicular post for rebuilding of teeth, with treatment of passages, according to claim 1, whereupon the head comprises two lateral flat faces.

**6.** An intra-radicular post for rebuilding ot teeth, with treatment of passages, according to claim 1, whereupon each segment of the post has an approximate height of 1 mm.

**7.** An intra-radicular post for rebuilding of teeth, with treatment of the passages, according to claim 1, whereupon the tapered body comprises seven conical segments; the apical portion comprises three cylindrical segments, and the head portion comprises four conical segments.

**8.** An intra-radicular post of adjustable dimensions, for rebuilding of teeth, with treatment of the passages, comprising:
an apical portion formed by a plurality of cylindrical segments.
a tapered body adjacent to the apical portion; and
a head adjacent to the body, formed by a plurality of cylindrical segments:
whereupon the post height can be modified by realizing up to two cuts in the apical portion and/or up to three cuts in the post head.

**9.** An intra-radicular post of adjustable dimensions for rebuilding of teeth, with treatment of passages, according to claim 8, whereupon the height adjustment consists in cutting one, two or three conical segments from the head.

**10.** An intra-radicular post of adjustable dimensions, for rebuilding of teeth, with treatment of passages, according to claim 8, whereupon the height adjustment consists in cutting one or two cylindrical segments of the apical portion.
